# EUROPÄISCHE PATENTSCHRIFT

(11) **EP 3 795 320 B1**
(45) Veröffentlichungstag und Bekanntmachung des Hinweises auf die Patenterteilung: **25.09.2024**
(21) Anmeldenummer: 20180404.4
(22) Anmeldetag: 17.06.2020
(51) Int. Cl.: B28B 11/24, B28B 11/12, B28B 11/04, C04B 33/34, C04B 41/00, C04B 41/45, C04B 41/86

(54) **VERFAHREN ZUR HERSTELLUNG EINES KERAMISCHEN SANITÄRGEGENSTANDS**
METHOD FOR MANUFACTURING A CERAMIC SANITARY ARTICLE
PROCÉDÉ DE FABRICATION D'UN ÉLÉMENT SANITAIRE CÉRAMIQUE

(30) Priorität: 18.09.2019 DE 102019125139
(43) Veröffentlichungstag der Anmeldung: 24.03.2021
(73) Patentinhaber: Duravit Aktiengesellschaft, 78132 Hornberg (DE)
(72) Erfinder: STAMMEL, Thomas, 78132 Hornberg (DE); GILLES, Christian, 77652 Offenburg (DE)
(74) Vertreter: Lindner Blaumeier Patent- und Rechtsanwälte

(56) Entgegenhaltungen:
- WO-A1-2014/037670
- WO-A1-2016/126709
- JP-A- 2001 233 663
- JP-A- 2004 026 571
- KR-B1- 101 270 632

## Beschreibung

Die Erfindung betrifft ein Verfahren zur Herstellung eines keramischen Sanitärgegenstands, insbesondere eines Waschbeckens oder Waschtischs, bei dem aus einer keramischen Masse unter Verwendung einer Form ein Grünkörper hergestellt wird, der anschließend zur Bildung eines gebrannten Scherbens in einem Brand gebrannt wird.

Derartige Sanitärgegenstände sind in unterschiedlicher Form bekannt, beispielsweise in Form von Waschbecken oder Waschtischen, aber auch von Duschwannen oder-tassen, WCs, Bidets, etc. Es handelt sich um keramische Gegenstände, wobei unter dem Begriff "Keramik" vorliegend auch Sanitärgegenstände auf Porzellanbasis verstanden werden. Ein solcher Gegenstand wird üblicherweise in einem Gießverfahren hergestellt, wobei dies entweder in einem Gipsguss oder in einem Druckguss mit Kunststoffformen erfolgt. Nach Anmachen der keramischen Gießmasse wird diese in die entsprechende Gussform gegeben, verbleibt dort eine Zeit lang und bildet einen Grünkörper aus, der noch einen hohen Wasseranteil aufweist. Auf den getrockneten Grünkörper wird sodann zumindest an den in der Montagestellung des Sanitärgegenstands sichtbaren Flächen eine Glasur aufgetragen, wozu eine entsprechende Glasurmasse zumeist aufgespritzt wird. Anschließend wird der Grünkörper gebrannt, wodurch das Wasser ausgetrieben wird und der gebrannte Scherben seine Festigkeit erhält, wie auch die Glasur eingebrannt wird und ihren Glanz erhält. Die Herstellungsroute eines solchen keramischen Sanitärgegenstands ist hinlänglich bekannt.

Während des Brandes schwindet der Scherben, resultierend aus dem Verlust des Wassers und dem Sintern der keramischen Masse. Dieses Schrumpfen kann beachtliche Ausmaße zeigen, wobei der Schwindungsprozess sich von Scherben zu Scherben unterscheidet, da die entsprechenden Vorgänge in den einzelnen Scherben, also bei Herstellung separater Sanitärgegenstände, in leicht unterschiedlicher Weise ablaufen. Das heißt, dass es während des Brandes zu einer entsprechenden Deformation des Scherbens kommt und demzufolge jeder Scherben und damit auch der spätere Sanitärgegenstand nach dem Brand eine gewisse Toleranz aufweist. Diese Toleranz liegt bezogen auf die Breite und die Ausladung des Sanitärgegenstands, beispielsweise eines Waschtischs, bei ca. +/-1%. Bei einem 1000 mm breiten Waschtisch bedeutet dies eine Toleranz von +/- 1 cm von Waschtisch zu Waschtisch. Bezogen auf die Deformation gibt es Toleranzen von bis zu 5 mm auf die Ausladung. Das heißt, dass sich demzufolge im Rahmen der Fertigung keramischer Gegenstände beachtliche geometrische respektive maßliche Unterschiede zwischen innerhalb einer Charge oder über mehrere Chargen hergestellten Sanitärgegenständen ergeben, was natürlich nicht gewünscht ist.

Darüber hinaus sind in Bezug auf Rundung technologische Grenzen an einen minimalen Rundungsradius, der an Übergängen von ebenen Flächen, beispielsweise an Kanten eines Waschtischs, gegeben ist, gesetzt, die eingehalten werden müssen, da es ansonsten zu hohen Spannungen und daraus resultierend zu einer Rissbildung kommt. Der minimal mögliche Radius liegt beispielsweise bei Feinfeuerton bei ca. 7 mm, bei einer hochfesten Masse bei ca. 5 mm. Auch hier sind Einschränkungen gegeben, wobei natürlich auch im Bereich des sich ausbildenden Radius schrumpfungsbedingte Toleranzen über mehrere Sanitärgegenstände gegeben sind.

WO 2016/126709 A1 offenbart ein Verfahren zur Herstellung eines Sanitärgegenstandes wie eines Waschtisches oder dergleichen. Dort wird aus einer keramischen Masse durch Extrusion ein Grünkörper in Form einer Platte extrudiert. Diese Platte wird anschließend getrocknet. Dabei hat der extrudierte Grünkörper ein beabsichtigtes, großes Übermaß von ca. 20% verglichen mit den Endabmessungen, die der spätere, finale Sanitärgegenstand haben soll. Diese grobe Platte wird in einem ersten Brennvorgang gebrannt, die Temperatur liegt hier im Bereich zwischen 650 - 1480 °C. Die gebrannte Platte kann sodann optional in einem ersten Oberflächenbearbeitungsschritt bearbeitet werden, worüber auch präzise die Dicke der Platte eingestellt werden kann. In jedem Fall wird die Platte auf die exakt vor Ort ausgemessene Größe geschnitten. Hierzu wird eine Diamantsäge, eine Wasserschneidvorrichtung oder ähnliches verwendet, das heißt, dass großflächig Teile abgeschnitten werden. An dieses Absägen kann sich entweder erstmalig oder nochmals die Oberflächenbearbeitung anschließen. Schließlich wird die Glasur aufgebracht, die anschließend gebrannt wird.

JP 2001 233663 A beschreibt ein Verfahren, bei dem ein gebrannter, glasierter Körper lokal mit einer zweiten Glasur versehen wird. Die zuerst aufgebrachte Glasur wird lokal abgetragen, wozu ein kleiner Bohrer oder ein Sandstrahlgerät verwendet wird. Anschließend wird der freigelegte, kleine Bereich mit der zweiten Glasur, bei der es sich um ein in ein Bindemittel eingebrachtes Pulver handeln kann, aufgefüllt. Es schließt sich ein erneuter Brennvorgang an, in dem sodann die zweite Glasur eingebrannt wird. Die mengenmäßige Bemessung dieser zweiten Glasur vor dem Brand ist derart, dass sich nach dem Brennen eine homogene Oberfläche ergibt.

JP 2004 026571 A beschreibt eine Möglichkeit, Glasurdefekte in Form von Pinholes am fertigen, gebrannten Endprodukt zu reparieren, gleichzeitig aber auch den hierbei entstehenden Abfall möglichst gering zu halten. Zu diesem Zweck wird der Glasurdefekt quasi ausgeschnitten, wozu ein entsprechendes Schneidwerkzeug wie eine Oberfräse verwendet werden kann. Mit diesem Werkzeug wird lokal nur die Defektstelle ausgeschnitten, also das Pinhole. Nach dem Ausbohren des Defekts wird eine Reparaturglasur lokal in die Defektbohrung eingebracht. Hieran schließt ein zweiter Brand an, der bei einer niedrigeren Temperatur als der erste Brand erfolgt. Im Endergebnis wird ein Sanitärgegenstand erhalten, der in Bezug auf kleinste Glasurfehler lokal exakt an diesen Fehlstellen repariert ist. Die beschriebene Reparaturweise kann nur für Glasurdefekte verwendet werden, die einen Durchmesser von 0,5 - 1 mm aufweisen, da es nur bei solchen Defekten möglich ist, eine solche lokale Spot-Reparatur vorzunehmen. Denn mit der zweiten Glasur muss sichergestellt werden, dass die Farbidentität gegeben ist und demzufolge der geringe zusätzliche Glasurauftrag nicht sichtbar ist.

WO 2014/037670 A1 offenbart ein Verfahren zur Herstellung einer Fliese, bei dem in einer Gießform zunächst ein Grünkörper hergestellt wird. Der Grünkörper hat Rohmaße, die größer sind als die beabsichtigten Endmaße. Daher wird bereits der Grünkörper mechanisch materialabtragend bearbeitet. Er wird dazu auf ein Endmaß gebracht, sodass sich unter Berücksichtigung des Brennschwunds nach dem dann folgenden Brand ein entsprechendes Endmaß an der gebrannten Fliese einstellt.

Der Erfindung liegt damit das Problem zugrunde, ein demgegenüber verbessertes Verfahren anzugeben, das die Herstellung maßhaltiger Sanitärgegenstände ermöglicht.

Zur Lösung dieses Problems ist bei einem Verfahren der eingangs genannten Art erfindungsgemäß vorgesehen, dass der gebrannte Scherben nach dem Brand an einer oder mehreren Sichtflächen Material abtragend nur durch Fräßen oder Schleifen bearbeitet wird, bis er ein gewünschtes Maß in Bezug auf seine Länge, Breite, Höhe und/oder Kantenradien aufweist, wonach der bearbeitete Scherben zumindest an der oder den bearbeiteten Sichtflächen glasiert und zum Einbrennen der Glasur ein weiteres Mal gebrannt wird.

Das erfindungsgemäße Verfahren sieht einen zweistufigen Brand vor, wobei zwischen dem ersten Brand und dem zweiten Brand eine Material abtragende Bearbeitung des im ersten Brand gebrannten Scherbens erfolgt, gefolgt von einer Glasurbeschichtung und einem zweiten Brand. Nach dem Gießen und Trocknen des Scherbens wird der Scherben, entweder unglasiert, teilweise glasiert oder komplett glasiert, worauf nachfolgend noch eingegangen wird, in einem ersten Brand gebrannt. Dies führt dazu, dass die auszutreibenden Stoffe wie Wasser, Kohlendioxid, organische Hilfsstoffe etc. ausgetrieben werden und die keramische Masse sintert. Innerhalb dieses ersten Brands kommt es zu den vorstehend beschriebenen Schwindungs- und Deformationsvorgängen, die innerhalb dieses ersten Brandes nahezu vollständig oder vollständig abgeschlossen werden.

Nach Durchführung des ersten Brandes ist demzufolge ein quasi fertig gebrannter Scherben bzw. Sanitärgegenstand gegeben, der jedoch, wie vorstehend beschrieben, beachtlich große geometrische Toleranzen aufweist.

Im nächsten Schritt wird nun dieser gebrannte Gegenstand an einer oder mehreren Sichtflächen, also Flächen, die in der Montagestellung optisch zu sehen sind, also freiliegen, Material abtragen bearbeitet, das heißt, er wird durch Fräsen oder Schleifen unter Entfernung gebrannten Material an der oder den Sichtflächen bearbeitet, bis er ein gewünschtes Maß aufweist. Das heißt, dass der Scherben in diesem Schritt auf ein exaktes, gewünschtes Maß in Bezug auf Länge, Breite, Höhe, Ausladung, Kantenradius etc. bearbeitet wird.

Im nächsten Schritt wird eine Glasur aufgebracht, die zumindest auf die bearbeiteten Sichtflächen aufgebracht wird, was üblicherweise durch Aufsprühen der Glasurmasse erfolgt. Anschließend wird der bereits ein erstes Mal gebrannte Scherben oder Sanitärgegenstand ein zweites Mal gebrannt, um die Glasur einzubrennen. Während dieses Brandes kommt es nun, da die keramische Masse bereits gebrannt und daher gesintert ist und die Schwindungs- und Deformationsvorgänge weitestgehend oder vollständig bereits im ersten Brand abgeschlossen wurden, zu keinen weiteren nennenswerten Schwindungs- oder Deformationsvorgängen, das heißt, dass der bereits einmal gebrannte Sanitärgegenstand im zweiten Brand seine Form und Maße beibehält. Es kommt lediglich zum Einbrennen der Glasur, nicht aber zu weiteren Sintervorgängen innerhalb des keramischen Materials. Daher weist der dann im zweiten Brand fertig gebrannte Sanitärgegenstand exakt die gewünschten Maße in jeder Dimension auf, die er beabsichtigter Weise haben soll. Versuche haben gezeigt, dass beispielsweise in Bezug auf das Längen- und Breitenmaß eines Waschtischs beispielsweise bei einer Länge von 1000 mm eine Abweichung vom Soll-Maß von ca. +/- 0,3 mm gegeben ist, während in Bezug auf die Waschtischbreite bei einer Soll-Breite von 450 mm eine Toleranz von ca. +/- 0,2 mm festgestellt wurde.

Damit lässt das erfindungsgemäße Verfahren die Herstellung von extrem maßhaltigen Sanitärgegenständen über eine beliebige Anzahl zu, das heißt, dass jeder fertig gebrannte Sanitärgegenstand letztlich identische Maße aufweist, sowohl was Längen-, Breiten- und Höhenmaße angeht, als auch etwaige Radien an Rundungen und Ähnliches.

Gemäß einer vorteilhaften Weiterbildung der Erfindung ist vorgesehen, dass die Brenntemperatur beim zweiten Brand niedriger ist als die Brenntemperatur beim ersten Brand. Da beim zweiten Brand nur noch die Glasur einzubrennen ist, was auch bei etwas niedrigeren Brenntemperaturen als zum Brennen der keramischen Masse erfolgen kann, kann durch eine etwas niedrigere Brenntemperatur im zweiten Brand ein auch noch so geringes weiteres Schrumpfen ausgeschlossen werden. Dabei sollte die Brenntemperatur beim zweiten Brand um ca. 10 - 100 °C, insbesondere um 15 - 60 °C und vorzugsweise um 20-40°C niedriger sein, wobei die Brenntemperatur beim ersten Brand zwischen 1200 - 1300 °C, insbesondere 1240 - 1290 °C betragen kann.

Da, wie beschrieben, beim zweiten Brand nur noch die Glasur einzubrennen ist, kann auch die Haltezeit während des zweiten Brands kürzer sein als die Haltezeit während des ersten Brands. Denn die Glasurbeschichtung ist äußerst dünn, sie beträgt ca. 0,9 mm und wird sehr homogen aufgebracht. Das heißt, dass diese dünne Glasurbeschichtung auch relativ schnell zu einer glasartigen, geschlossenen Oberflächenschicht einbrennt, weshalb die Haltezeit während des zweiten Brands deutlich kürzer als beim ersten Brand sein kann. Bevorzugt ist die Haltezeit beim zweiten Brand um 90 - 110 min, insbesondere um 100 min kürzer als beim ersten Brand, wobei die Haltezeit während des ersten Brands beispielsweise zwischen 240 - 360 min, insbesondere zwischen 250 - 350 min betragen kann. Eine kürzere Haltezeit ist jedoch nur optional, es kann auch eine vergleichbare Haltezeit oder auch eine etwas längere Haltezeit als im ersten Brand vorgesehen sein.

Ein zentraler Schritt im erfindungsgemäßen Verfahren ist die Material abtragende Bearbeitung des im ersten Brand gebrannten Scherbens an einer oder mehreren Sichtflächen. Diese Materialabtragung erfolgt bevorzugt durch Fräsen mittels eines geeigneten Fräswerkzeugs, wobei das Fräswerkzeug bevorzugt robotergesteuert bewegt wird, um den hochgenauen Materialabtrag zu erreichen. Beispielsweise wird das Fräswerkzeug über einen 5-Achs-Roboter geführt, der eine beliebige Bewegung des Fräswerkzeugs im Raum ermöglicht, so dass beliebige Flächengeometrien bearbeitet werden können. Alternativ zum Fräsen ist auch ein Materialabtrag durch Schleifen denkbar, wobei sich diese Bearbeitung insbesondere für größere, ebene Flächen eignet. Mit einem solchen Fräswerkzeug bzw. Profilfräser, insbesondere in Verbindung mit dem Roboter, ist es also möglich, nahezu beliebige Geometrien zu erzeugen, z.B. ebene Flächen, eckige Strukturen, gewellte Flächen bzw. Wellenstrukturen oder insbesondere Rundungen im Bereich von Ecken, die große Radien vom mehreren Zentimetern aufweisen, die aber, wie nachfolgend erläutert wird, auch sehr kleine Radien haben können.

Gemäß einer vorteilhaften Weiterbildung der Erfindung erfolgt die Material abtragende Bearbeitung derart, dass Kanten am Sanitärgegenstand nach dem zweiten Brand einen Radius ≤ 2 mm, insbesondere ≤ 1 mm aufweisen. Hier zeigt sich ein weiterer Vorteil des erfindungsgemäßen Verfahrens, denn das Verfahren ermöglicht es, Kanten mit minimalem Radius auszubilden. Denn letztlich ist es möglich, dass der Kantenradius nur durch die Schichtdicke der im zweiten Brennprozess eingebrannten Glasur bestimmt wird. Weist beispielsweise der Sanitärgegenstand, also der Waschtisch oder das Waschbecken, zwei unter 90° zueinander verlaufende, an einer Kante ineinander übergehende Sichtflächen auf, so kann die Material abtragende Bearbeitung derart erfolgen, dass die Kante als scharfe 90°-Kante ausgebildet wird, die also keinen Radius aufweist. Werden nun die Sichtflächen und damit auch die Kante mit der Glasurmasse belegt und wird diese eingebrannt, so bildet sich nur durch die äußerst dünne Glasurschicht, die eine Dicke von ca. 0,9 mm aufweist, an der Kante ein minimaler Radius aus, der glasurdickenabhängig auch < 1 mm sein kann. Damit ist es möglich, sehr exakte, nur minimale Rundungen aufweisende Kanten am Übergang zweier Sichtflächen, die unter einem beliebigen Winkel, also auch unter Winkeln kleiner oder größer 90° zueinander stehen können, auszubilden. Die Kanten können an beliebigen Stellen des Sanitärgegenstands ausgebildet bzw. insbesondere durch Fräsen erzeugt werden.

Wie bereits einleitend beschrieben, besteht die Möglichkeit, im ersten Brand einen unglasierten Scherben zu brennen und, nach Bearbeitung der entsprechenden Sichtflächen, den bereits einmal gebrannten Scherben zu glasieren und anschließend ein zweites Mal zu brennen. Eine zweckmäßige, jedoch nicht erfindungsgemäße Verfahrensausgestaltung sieht demgegenüber jedoch vor, dass vor dem ersten Brand zumindest lokal, gegebenenfalls auch vollflächig an allen Sichtflächen, eine Glasur auf den Scherben aufgebracht wird, die beim ersten Brand eingebrannt wird. Die Glasur kann dabei entweder nur auf Sichtflächen, die nachfolgend nicht mechanisch bearbeitet werden, aufgebracht werden, oder vollflächig auf alle Sichtflächen, so dass die Glasur zumindest an den zu bearbeitenden Sichtflächen während der mechanischen Bearbeitung entfernt wird und diese bearbeitenden Sichtflächen dann ein zweites Mal glasiert werden. Der Vorteil einer Glasurbeschichtung bereits vor dem ersten Brand liegt darin, dass der nur getrocknete, jedoch noch nicht gebrannte Scherben viel Wasser aus der Glasurbeschichtung aufnimmt, da er ein hohes Saugvermögen zeigt. Dies ermöglicht ein leichteres Aufspritzen der Glasur und die Ausbildung eines homogenen Spritzbilds. Gleichwohl ist, wie beschrieben, die teilweise oder vollständige Glasierung vor respektive im ersten Brand nicht unbedingt erforderlich.

Wird jedoch, nicht erfindungsgemäß, eine solche erste Glasur aufgebracht, entweder nur lokal oder vollflächig, so findet nach dem ersten Brand die mechanische Bearbeitung statt, im Rahmen welcher bei Teilglasur beispielsweise nur nicht glasierte Sichtflächen bearbeitet werden oder bei größerflächiger oder Vollglasur auch bereits glasierte Sichtflächen unter Abtrag der Glasur bearbeitet werden. In jedem Fall sind die bearbeiteten Sichtflächen vor dem zweiten Brand zu glasieren, also mit der Glasurmasse zu bespritzen, wobei dieser Glasurauftrag derart erfolgt, dass sich ein homogener, stufenfreier Übergang zur bereits glasierten Fläche ergibt.

Neben dem erfindungsgemäßen Verfahren betrifft die Erfindung ferner einen keramischen Sanitärgegenstand, der verfahrensgemäß hergestellt wurde. Dieser zeichnet sich durch eine äußerst hohe Maßhaltigkeit aus, in Länge, Breite und/oder Höhe, je nachdem, in welchem Umfang respektive welche Sichtflächen entsprechend mechanisch bearbeitet wurden, wie er auch hochgenaue Kanten und gegebenenfalls auch minimale Radien aufweist. Insbesondere ist diese extrem hohe Maßhaltigkeit auch über eine beliebige Vielzahl hergestellter, gleicher Sanitärgegenstände gegeben.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung zur Erläuterung des erfindungsgemäßen Verfahrens, wobei der Schritt d) nicht erfindungsgemäß ist,
- Fig. 2: eine Teilansicht eines erfindungsgemäßen Sanitärgegenstands nach dem ersten Brand und nach Durchführung der mechanischen Bearbeitung, und
- Fig. 3: eine Schnittansicht durch den erfindungsgemäßen Sanitärgegenstand aus Fig. 2 im Kantenbereich.

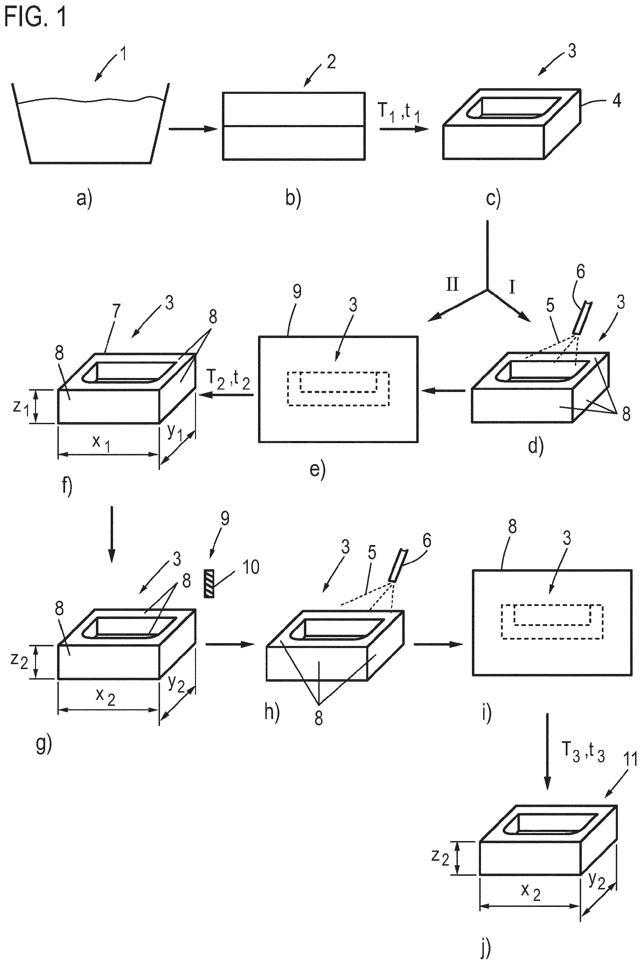

Fig. 1 zeigt in Form eines Ablaufdiagramms den Ablauf des erfindungsgemäßen Verfahrens.

Im Schritt a) wird zunächst eine keramische, gießbare Masse 1 angemacht, die sodann, siehe Schritt b), in eine Gipsguss- oder Druckgussform 2 eingebracht wird, wo sie für eine bestimmte Zeit verbleibt, um einen keramischen Grünkörper zu bilden, der nach Entnahme aus der Form 2 für eine definierte erste Zeit t₁ bei einer definierten Temperatur T₁ getrocknet wird, so dass sich, siehe Schritt c), ein getrockneter Grünkörper 3 ergibt, hier exemplarisch in Form eines Waschtischs oder Waschbeckens 4.

Sodann bestehen zwei Verfahrensvarianten, die über die Pfeile I und II dargestellt sind. Gemäß der Variante I, die nicht Teil der Erfindung ist, kann der Grünkörper 3 mit einer Glasurmasse 5 belegt werden, wozu eine geeignete Spritzeinrichtung 6 verwendet wird, um die Glasurmasse 5 auf eine oder mehrere der Sichtflächen 8 des Grünkörpers 3 aufzubringen. Dies ist im nicht erfindungsgemäßen Schritt d) gezeigt. Nach Aufbringen dieser Glasur wird der glasurbeschichtete Grünkörper 3, siehe Schritt e), in einen Brennofen 9 gegeben, um ihn und die aufgespritzte Glasurmasse 5 zu brennen.

Gemäß der Variante II wird nach Trocknung des Grünkörpers 3 zur Bildung eines gebrannten Scherbens 7 im Schritt c) der lediglich getrocknete, jedoch nicht glasurbeschichtete direkt in den Brennofen 9 gegeben, das heißt, der unglasierte Grünkörper 3 wird in diesem Fall im Schritt e) gebrannt.

Der Grünkörper 3 wird für eine vorbestimmte Zeit t₂ bei einer vorbestimmten Brenntemperatur T₂ im Brennofen 9 gebrannt, wobei die Zeit t₂, die sogenannte Haltezeit zwischen 240 - 360 min, insbesondere zwischen 250 - 350 min beträgt. Die Brenntemperatur während dieses ersten Brands beträgt zwischen 1200 - 1300 °C, insbesondere zwischen 1240 - 1290 °C.

Nach Durchführung des Brennvorgangs wird der gebrannte Scherben 7 dem Brennofen 9 entnommen und abgekühlt, was im Schritt f) gezeigt ist. Nach dem Brand weist der Scherben 7 aufgrund während des Brennens abgeschlossener Schwindungs- und Deformationsvorgänge geänderte Maße im Vergleich zum nur getrockneten Grünkörper gemäß Schritt c) auf. Nach dem ersten Brand weist der Scherben 7 exemplarisch eine Länge x₁, eine Breite y₁ und eine Höhe z₁ auf.

Im nächsten Schritt g) wird der gebrannte Scherben 7 mittels eines Werkzeugs 10, vorzugsweise eines Fräsers 11, der über einen Mehrachs-Roboter, insbesondere einen 5-Achs-Roboter, im Raum bewegbar ist, im Bereich einer oder mehrerer respektive aller Sichtseiten 8, die also in der Montagestellung vom Nutzer einsehbar sind, Material abtragend bearbeitet, bis er in der jeweiligen, gewünschten Dimension ein vorbestimmtes Soll-Maß aufweist. Exemplarisch weist der Scherben 7 nach dieser Material abtragenden Bearbeitung eine Länge x₂, eine Breite y₂ und eine Höhe z₂ auf, wobei hier angenommener Maßen die Oberflächen in jeder Dimension bearbeitet wurden. Das heißt, dass x₂ < x₁, y₂ < y₁ und z₂ < z₁ ist. Es ist jedoch nicht erforderlich, jedwede Dimension zu bearbeiten, viel mehr können, je nachdem, in welcher Richtung eine hochgenaue Maßhaltigkeit gewünscht wird, auch nur einige der Dimensionen bearbeitet werden. Durch das Bearbeiten der Sichtflächen 8 wird der gebrannte Scherben 7 so bearbeitet, dass er die gewünschten Soll-Endmaße aufweist.

Im nächsten Schritt h) wird der bearbeitete Scherben 7 an allen Sichtflächen 8 glasiert, das heißt, dass unter Verwendung eines Spritzwerkzeugs 6 (erneut) eine Glasurmasse 5 aufgespritzt wird. Der demgemäß glasurbeschichtete Scherben 7 wird sodann erneut in den oder einen Brennofen 9 gegeben (Schritt i)), wo er ein zweites Mal gebrannt wird. Dies erfolgt bei einer Brenntemperatur T₃, die etwas niedriger ist als die Brenntemperatur T₂ während des ersten Brands. Die Brenntemperatur T₃ sollte um ca. 10 - 100°, insbesondere um 15-60 °C und vorzugsweise um 20 - 40° niedriger sein.

Auch die Haltezeit ts, also die Dauer, während der der zweite Brand erfolgt, ist kürzer als die Haltezeit t₂ im ersten Brand. Die Haltezeit t₃ sollte um 90 - 110 min, insbesondere um ca. 100 min kürzer sein als die Haltezeit t₂. Die Verringerung der Brenntemperatur T₃ ist dahingehend von Vorteil, als hierdurch definitiv vermieden wird, dass es während dieses zweiten Brands zu geringsten Schrumpfungsvorgängen und damit zu Deformationsvorgängen kommt, diese sind, wie beschrieben, im Rahmen des ersten Brands bereits abgeschlossen. Durch die reduzierte Brenntemperatur im zweiten Brand wird vermieden, dass sich die durch die mechanische Bearbeitung ausgearbeitete Sollmaße x₂, y₂ und z₂ auch nur geringfügig verändern, abgesehen von dem minimierenden Zuwachs durch die Glasurschicht, die sehr dünn ist und üblicherweise kleiner 1 mm dick ist.

Die reduzierte Haltezeit wird eingestellt, da es in diesem zweiten Brand nur noch darum geht, die dünne Glasurschicht einzubrennen, was rasch von statten geht.

Nach Durchführung des zweiten Brandes wird der dann fertig gebrannte und glasierte keramische Sanitärgegenstand 12 dem Brennofen 9 entnommen, wie im Schritt j) gezeigt. Er weist, da es während des zweiten Brandes zu keinen weiteren Deformationen gekommen ist, nach wie vor die im Schritt g) durch die mechanische Bearbeitung ausgearbeiteten Sollmaße x₂, y₂ und z₂ auf, wobei sich diese lediglich durch die aufgebrachte Glasurschicht, die wie beschrieben eine Dicke kleiner 1 mm aufweist, nicht nennenswert verändert haben. Das heißt, dass der fertige Sanitärgegenstand 12 exakt die gewünschten Sollmaße aufweist und demzufolge nicht toleranzbehaftet ist und reproduzierbar mit exakt diesen Maßen hergestellt werden kann, so dass eine beliebige Anzahl von Sanitärgegenständen 12 mit gleichen Sollmaßen hergestellt werden können.

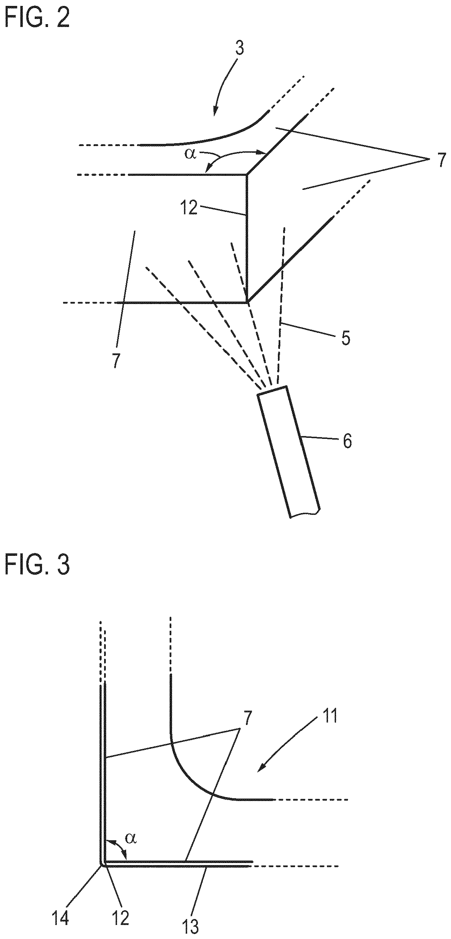

Fig. 2 zeigt eine Teilansicht des bereits einmal gebrannten Scherbens 7 nach Durchführung der Material abtragenden Bearbeitung gemäß Schritt g). Es sei angenommen, dass die Sichtflächen 8, die im Bereich der linken vorderen Kante 13 zusammenlaufen, bearbeitet wurden. Es sei ferner angenommen, dass die Kante 13 respektive die benachbarten, rechten und linken Sichtflächen 8, unter einem Winkel α von 90° zueinander stehen, siehe hierzu auch die Schnittansicht gemäß Fig. 3. Wie in Fig. 2 gezeigt, wird über die Spritzeinrichtung 6 die Glasurmasse 5 auf die gefrästen Sichtflächen 8 aufgebracht und anschließend im zweiten Brand (Schritt i)) eingebrannt.

Fig. 3 zeigt eine Schnittansicht durch den fertig gebrannten keramischen Sanitärgegenstand 12. Gezeigt ist wiederum die nach wie vor scharfe Kante 13 am Übergang der beiden Sichtflächen 8, die nach wie vor exakt unter dem Winkel α = 90° zueinander verlaufen. Gezeigt ist des Weiteren die eingebrannte Glasurschicht 14, die extrem dünn ist und eine Dicke von üblicherweise weniger als 1 mm aufweist, die hier jedoch aus Darstellungsgründen etwas dicker gezeigt ist. In jedem Fall bildet sich an der Kante 13 ein nur minimaler Radius 15 der Glasurschicht 14 aus, das heißt, dass an dieser Kante des gebrannten Sanitärgegenstands 12 eine Rundung mit einem minimalen Radius gegeben ist, die letztlich in ihrem Radius nur von der Schichtdicke der Glasurbeschichtung 14 abhängt. Aufgrund des mechanischen Bearbeitens der angrenzenden Sichtflächen 8 ist die Ausbildung der Kante respektive des Kantenradius nicht länger materialabhängig, da bei bisherigen üblichen Herstellungsverfahren zur Vermeidung von Rissbildungen keine scharfen Kanten, sondern nur Kanten mit einem Radius von mehreren Millimetern ausgebildet werden konnten.

Eine solche Kante kann an einer beliebigen Position am Sanitärgegenstand vorgesehen werden, z.B. im Übergang zweier Seitenflächen, oder im Bereich einer oberseitigen Vertiefung zur Aufnahme einer oder mehrerer Armaturen oder einer Seifenablage etc., also überall dort, wo zwei unter einem Winkel zueinander verlaufende (ebene) Flächen ineinander übergehen. Neben sehr kleinen Radien bzw. scharfen Kanten können natürlich mit dem entsprechenden Fräswerkzeug bzw. Profilfräser auch Rundungen mit größeren Radien, z.B. im Zentimeterbereich, erzeugt werden, die dann mit der Glasur nur unwesentlich vergrößert werden.

Neben der Herstellung eines Sanitärgegenstandes mit extrem hoher Maßhaltigkeit in einer gewünschten Raumrichtung ermöglicht das erfindungsgemäße Verfahren daher des Weiteren auch die Ausbildung beliebiger Kanten oder Übergänge mit variierendem Radius, das heißt, dass einerseits die Ausbildung hochgenauer Rundungen durch entsprechendes mechanisches Bearbeiten der Flächenübergänge möglich ist, wie auch die Ausbildung von Kanten mit kleinerem Radius bis hin zu Kanten mit minimalem Radius von 1 mm oder weniger.

## Patentansprüche

1. Verfahren zur Herstellung eines keramischen Sanitärgegenstands (11), insbesondere eines Waschbeckens oder Waschtischs, bei dem aus einer keramischen Masse (1) unter Verwendung einer Gipsgussform oder einer Druckgussform ein gegossener Grünkörper (3) hergestellt wird, der anschließend zur Bildung eines gebrannten Scherbens (7) in einem Brand gebrannt wird, wobei der gebrannte Scherben (7) nach dem Brand an einer oder mehreren Sichtflächen (8) Material abtragend nur durch Fräßen oder Schleifen bearbeitet wird, bis er ein gewünschtes Maß in Bezug auf seine Länge, Breite, Höhe und/oder Kantenradien aufweist, wonach der bearbeitete Scherben (7) zumindest an der oder den bearbeiteten Sichtflächen (8) glasiert und zum Einbrennen der Glasur ein weiteres Mal gebrannt wird.

2. Verfahren nach Anspruch 1, **dadurch gekennzeichnet, dass** die Brenntemperatur (T₃) beim zweiten Brand niedriger ist als die Brenntemperatur (T₂) beim ersten Brand.

3. Verfahren nach Anspruch 2, **dadurch gekennzeichnet, dass** die Brenntemperatur (T₃) beim zweiten Brand um 10-100°C, insbesondere um 15-60°C, vorzugsweise um 20-40°C niedriger ist.

4. Verfahren nach einem der vorangehenden Ansprüche, **dadurch gekennzeichnet, dass** die Brenntemperatur (T₂) beim ersten Brand 1200-1300°C, insbesondere 1240-1290°C beträgt.

5. Verfahren nach einem der vorangehenden Ansprüche, **dadurch gekennzeichnet, dass** eine Haltezeit (t₃) während des zweiten Brands kürzer ist als eine Haltezeit (t₂) während des ersten Brands.

6. Verfahren nach Anspruch 5, **dadurch gekennzeichnet, dass** die Haltezeit (t₃) beim zweiten Brand um 90-110 min, insbesondere um 100 min kürzer ist.

7. Verfahren nach Anspruch 5 oder **dadurch gekennzeichnet, dass** die Haltezeit (t₂) beim ersten Brand 240-360 min, insbesondere 250-350 min beträgt.

8. Verfahren nach einem der vorangehenden Ansprüche, **dadurch gekennzeichnet, dass** die Material abtragende Bearbeitung derart erfolgt, dass Kanten am Sanitärgegenstand (12) nach dem zweiten Brand einen Radius ≤ 2mm, insbesondere ≤ 1mm aufweisen.

## Claims

1. Method for producing a ceramic sanitary article (11), more particularly a washbasin or washstand, wherein a plaster casting mould or a pressure casting mould is used to produce, from a ceramic composition (1), a cast green body (3), which is subsequently fired in a firing to form a fired body (7), wherein the fired body (7) after the firing is subjected to material-removing working only by milling or grinding on one or more visible faces (8) until it has a desired dimension in relation to its length, width, height and/or edge radii, after which the worked body (7) is glazed at least on the worked visible face or faces (8) and is fired a further time in order to fire the glaze.

2. Method according to Claim 1, **characterized in that** the firing temperature (T₃) in the second firing is lower than the firing temperature (T₂) in the first firing.

3. Method according to Claim 2, **characterized in that** the firing temperature (T₃) in the second firing is lower by 10-100°C, more particularly by 15-60°C, preferably by 20-40°C.

4. Method according to any of the preceding claims, **characterized in that** the firing temperature (T₂) in the first firing is 1200-1300°C, more particularly 1240-1290°C.

5. Method according to any of the preceding claims, **characterized in that** a holding time (t₃) during the second firing is shorter than a holding time (t₂) during the first firing.

6. Method according to Claim 5, **characterized in that** the holding time (t₃) in the second firing is shorter by 90-110 min, more particularly by 100 min.

7. Method according to Claim 5 or 6, **characterized in that** the holding time (t₂) in the first firing is 240-360 min, more particularly 250-350 min.

8. Method according to any of the preceding claims, **characterized in that** the material-removing working takes place in such a way that edges on the sanitary article (12) after the second firing have a radius ≤ 2 mm, more particularly ≤ 1 mm.

## Revendications

1. Procédé de fabrication d'un article sanitaire céramique (11), en particulier d'un lavabo ou d'un meuble lavabo, dans lequel on fabrique à partir d'une masse céramique (1) par utilisation d'une coquille en plâtre ou d'un moule de coulée sous pression un corps cru coulé (3), qui ensuite est cuit dans le cadre d'une cuisson pour former un biscuit cuit (7), le biscuit cuit (7) étant, après la cuisson, usiné sur une ou plusieurs surfaces de parement (8) par enlèvement de matière, seulement par fraisage ou abrasion, jusqu'à ce qu'il présente des valeurs souhaitées de sa longueur, de sa largeur, de sa hauteur et/ou du rayon de ses arêtes, ce après quoi le biscuit usiné (7) est émaillé au moins sur la ou les surfaces de parement usinées (8) et est cuit une fois de plus pour séchage au four de l'émail.

2. Procédé selon la revendication 1, **caractérisé en ce que** la température de cuisson (T₃) lors de la deuxième cuisson est inférieure à la température de cuisson (T₂) lors de la première cuisson.

3. Procédé selon la revendication 2, **caractérisé en ce que** la température de cuisson (T₃) lors de la deuxième cuisson est de 10-100 °C, en particulier de 15-60 °C, de préférence de 20-40 °C plus basse.

4. Procédé selon l'une des revendications précédentes, **caractérisé en ce que** la température de cuisson (T₂) lors de la première cuisson est de 1 200-1 300 °C, en particulier de 1 240-1 290 °C.

5. Procédé selon l'une des revendications précédentes, **caractérisé en ce qu'**un temps de séjour (t₃) pendant la deuxième cuisson est inférieur à un temps de séjour (t₂) pendant la première cuisson.

6. Procédé selon la revendication 5, **caractérisé en ce que** le temps de séjour (t₃) lors de la deuxième cuisson est de 90-110 min, en particulier de 100 min, plus court.

7. Procédé selon la revendication 5 ou 6, **caractérisé en ce que** le temps de séjour (t₂) lors de la première cuisson est de 240-360 min, en particulier de 250-350 min.

8. Procédé selon l'une des revendications précédentes, **caractérisé en ce que** l'usinage par enlèvement de matière est réalisé de façon que les arêtes de l'article sanitaire (12) présentent, après la deuxième cuisson, un rayon ≤ 2 mm, en particulier ≤ 1 mm.
